# FASCICULE DE BREVET EUROPEEN

(11) **EP 1 977 304 B1**
(45) Date de publication et mention de la délivrance du brevet: **03.03.2010**
(21) Numéro de dépôt: 06709168.6
(22) Date de dépôt: 25.01.2006
(51) Int. Cl.: G06F 3/033

(54) **PERFECTIONNEMENTS AUX PERIPHERIQUES D'ENTREE POUR ORDINATEUR OU SIMILAIRE**
VERBESSERUNGEN AN EINGABEPERIPHERIEGERÄTEN FÜR COMPUTER ODER DERGLEICHEN
IMPROVEMENTS TO INPUT PERIPHERALS FOR COMPUTER OR THE LIKE

(43) Date de publication de la demande: 08.10.2008
(73) Titulaire: Delattre, Eric, 59650 Villeneuve D'asq (FR)
(72) Inventeur: Delattre, Eric, 59650 Villeneuve D'asq (FR)
(74) Mandataire: Parzy, Benjamin Alain
(86) Numéro de dépôt international: PCT/FR2006/000170
(87) Numéro de publication internationale: WO 2007/085707

(56) Documents cités:
- WO-A-92/08208
- WO-A1-2005/010743
- DE-A1- 19 753 867
- FR-A1- 2 858 072
- GB-A- 2 283 080
- US-A1- 2003 058 219
- US-A1- 2004 017 355
- US-B1- 6 333 733
- US-B1- 6 844 871
- US-B2- 6 816 148

## Description

L'invention concerne des perfectionnements apportés aux périphériques d'entrée pour ordinateur ou similaire.

### ARRIERE-PLAN DE L'INVENTION

On connaît des périphériques d'entrée pour ordinateur, appelés communément souris, qui comportent une coque sur laquelle s'appuie la main de l'opérateur et qui est fixée sur une base apte à glisser sur une surface plane. Une telle souris est équipée de capteurs électriques aptes à générer des signaux électriques à destination de l'ordinateur en réponse à des mouvements de la souris, permettant de discriminer des mouvements selon deux directions distinctes, ce qui suffit pour la plupart des applications bureautiques, mais est insuffisant pour permettre une manipulation d'un objet (virtuel ou réel) dans l'espace.

On connaît par ailleurs, par exemple du document US 6 333 733, des périphériques d'entrée qui sont constitués d'une base fixe et d'une coque reliée à la base par une liaison cinématique autorisant trois degrés de liberté de translation et trois degrés de liberté de rotation de la coque par rapport à la base. L'opérateur déplace la coque dans l'espace au gré des mouvements qu'il veut imprimer à l'objet manipulé, et peut mobiliser simultanément plusieurs degrés de liberté. Le logiciel qui exploite les signaux des capteurs équipant un tel périphérique d'entrée est avantageusement programmé de façon que les mouvements de l'objet commandé reproduisent fidèlement les mouvements de la coque.

Néanmoins, l'un des degrés de liberté correspond à un mouvement de la coque selon une direction perpendiculaire au plan d'appui sur lequel repose la base du périphérique. Cette caractéristique empêche le repos de la main sur la coque et implique un appui carpien (c'est-à-dire sur le talon de la main) avec extension du poignet, ce qui risque d'engendrer dans le temps un trouble musculosquelettique connu sous le nom de syndrome du canal carpien.

En outre, l'appui carpien limite la précision des mouvements de la coque.

L'art antérieur est notamment illustré par les documents FR 2 858 072 et GB2283080.

### OBJET DE L'INVENTION

L'invention a pour objet un périphérique d'entrée atténuant les inconvénients précités.

### BREVE DESCRIPTION DE L'INVENTION

En vue de la réalisation de ce but, il est proposé un périphérique d'entrée pour ordinateur ou similaire, comportant une partie mobile manipulée par l'opérateur et équipé de capteurs électriques aptes à générer des signaux électriques à destination de l'ordinateur en réponse à des mouvements de la partie mobile imposés par l'opérateur. Selon l'invention, la partie mobile comprend une coque reliée à une base fixe au moyen d'une liaison cinématique agencée pour autoriser tout mouvement de la coque par rapport à la base à l'exception d'un déplacement selon une direction sensiblement perpendiculaire à un plan d'appui de la base, le périphérique comprenant un carénage mobile qui est entraîné par la coque et qui comporte une paroi latérale qui s'étend de façon à empêcher toute intrusion sous la coque quelque soit la position de celle-ci.

La coque peut alors être manipulée selon cinq degrés de liberté correspondant à deux translations selon des directions sensiblement parallèles au plan d'appui de la base et trois rotations, qui peuvent être mis en correspondance avec les cinq degrés de liberté correspondants de l'objet manipulé.

Quant au sixième degré de liberté manquant, il peut être contrôlé par un organe de commande équipant le périphérique.

Ainsi, il est possible de contrôler au moins cinq degrés de liberté de l'objet manipulé, tout en conservant la main en appui, et tout en gardant une correspondance très instinctive entre les déplacements de la coque et les déplacements de l'objet manipulé.

En outre, l'appui de la main sur la coque permet une précision de mouvement augmentée.

Quant au carénage, il évite au manipulateur de se pincer les doigts en les introduisant par inadvertance ou maladresse sous le bord de la coque. En outre, le carénage protège le mécanisme interne du périphérique de la poussière et autres polluants.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'un périphérique d'entrée selon un mode particulier de réalisation de l'invention ;
- la figure 2 est une vue en coupe selon la ligne II-II de la figure 1 ;
- la figure 3 est une vue en perspective partielle du périphérique d'entrée illustré aux figures 1 et 2, la coque et le carénage ayant été enlevés ;
- la figure 4 est une vue en perspective du carénage équipant le périphérique de l'invention ;
- la figure 5 est une vue en perspective du périphérique de l'invention ;
- la figure 6 est un schéma des mouvements possibles de la coque du périphérique d'entrée de l'invention ;
- la figure 7 est une vue analogue à la figure 2, montrant une partie des moyens de contrôle du mouvement équipant le périphérique de l'invention.

### DESCRIPTION DETAILLEE DE L'INVENTION

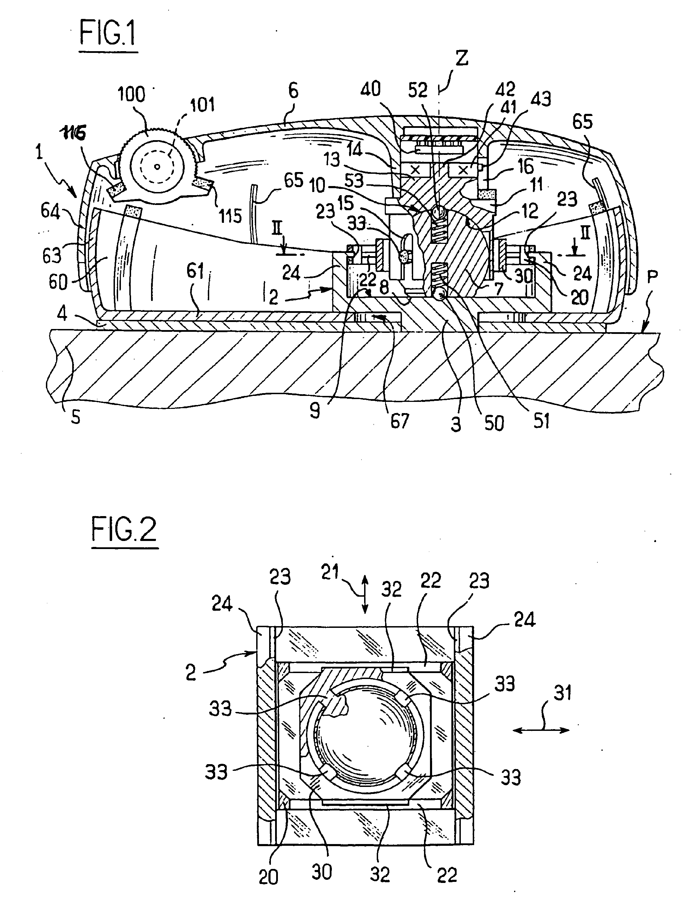

En référence à la figure 1, le périphérique d'entrée 1 de l'invention comporte une base 2 ayant un pied 3 dont l'extrémité est encastrée dans une semelle 4 qui repose sur un plan d'appui P ici défini par le plateau 5 d'une table.

Le périphérique d'entrée 1 comporte une coque 6 ayant une forme bombée ergonomique apte à faciliter la prise en main.

La coque 6 est reliée à la base 2 au moyen d'une liaison cinématique qui est ici réalisée par :
- un premier élément de liaison 7 qui présente une extrémité inférieure plane 8 qui s'étend contre une surface plane 9 de la base 2 parallèle au plan d'appui P, et une extrémité supérieure 10 sphérique. Le premier élément de liaison 7 est ainsi libre de glisser sur la surface plane 9 ;
- un second élément de liaison 11 ayant une extrémité inférieure 12 en forme de cavité sphérique homologue à l'extrémité supérieure sphérique 10 du premier élément de liaison 7 et enchâssée sur celle-ci de façon à former entre les deux éléments de liaison une liaison rotulaire, et une extrémité supérieure 13 cylindrique circulaire qui reçoit à rotation une cavité cylindrique circulaire 14 homologue de la coque 6, de façon à réaliser entre le second élément de liaison 11 et la coque 6 une liaison pivot ayant pour axe l'axe de pivotement référencé Z qui passe par le centre de l'extrémité sphérique 10. Le second élément de liaison 11 est empêché de tourner autour de l'axe de pivotement Z par des moyens d'arrêt détaillés plus loin en relation avec la figure 2.

Ces dispositions permettent les mouvements suivants:
- des débattements angulaires de la coque 6 par rapport à la base 2 sous l'effet d'un couple imposé par la main de l'opérateur sur la coque 6 autour d'axes contenus dans un plan équatorial de l'extrémité sphérique 10 parallèle au plan d'appui P ;
- une rotation de la coque 6 par rapport à la base 2 autour de l'axe de pivotement Z;
- des translations de la coque 6 par rapport à la base 2 sous l'effet d'un effort dans le plan de base imposé par la main de l'opérateur, lors desquelles l'extrémité inférieure plane 8 du premier élément de liaison 7 glisse sur la surface plane 9 de la base 2.

Les débattements et la rotation confèrent à la coque 6 trois degrés de liberté de rotation, tandis que les translations confèrent à la coque 6 deux degrés de liberté de translation.

On notera qu'un effort exercé par la main de l'opérateur sur la coque 6 selon une direction transverse perpendiculaire à la surface plane 9 est transmis directement à la base 2 par les éléments de liaison 7,11 et n'entraîne aucun mouvement de la coque 6. La main de l'opérateur peut donc reposer sur la coque 6, ce qui permet de soulager le bras et évite tout appui carpien.

Les cinq degrés de liberté de la coque 6 permis par la liaison cinématique entre la coque 6 et la base 2 sont avantageusement exploités pour figurer les cinq degrés de liberté correspondants d'un objet virtuel ou réel manipulé à l'aide du périphérique d'entrée de l'invention.

Quant au sixième degré, en l'occurrence celui qui correspond à une translation selon la direction transverse interdite par la liaison cinématique, il est ici contrôlé au moyen d'une molette de défilement 100 portée par la coque 6.

Comme cela est visible à la figure 2, le périphérique d'entrée 1 est équipé de pièces auxiliaires, à savoir un premier coulisseau 20 et un second coulisseau 30.

Le premier coulisseau 20 est monté sur la base 2 pour coulisser selon une direction 21 qui s'étend dans le plan équatorial précité. A cet effet, et comme cela est visible à la figure 1, le premier coulisseau 20 comporte des parois latérales dans lesquelles sont pratiquées des fentes qui reçoivent des tenons 23 portés par des montants 24 solidaires de la base 2 et qui s'étendent en regard l'un de l'autre de part et d'autre de la surface plane 9.

Le second coulisseau 30 est monté dans le premier coulisseau 20 pour coulisser selon une direction 31 qui s'étend dans le plan équatorial précité, perpendiculairement à la direction 21. A cet effet, le second coulisseau comporte des tenons 32 qui sont reçus dans des rainures 22 du premier coulisseau 20.

On remarquera que le premier coulisseau 20 et lé second coulisseau 30 ne subissent jamais directement l'effort imposé par la main de l'opérateur. En particulier, ils ne subissent aucun effort transverse, transmis directement de la coque 6 vers la base 2 par les éléments de liaison 7,11. Les coulisseaux 20,30 subissent uniquement des efforts d'entraînement selon un plan parallèle à la surface plane 9. Ils ne sont donc que très peu sollicités.

Les coulisseaux 20,30 ne participent pas à la définition de la liaison cinématique entre la coque 6 et la base 2, sauf en ce qu'ils bloquent le second élément de liaison 11 en rotation selon l'axe de pivotement Z.

A cet effet, le premier élément de liaison 7 et le second coulisseau 30 sont ici liés par des ergots 33 qui s'étendent selon des directions radiales contenues dans le plan équatorial précité. En pratique, le premier élément de liaison 7 et le second coulisseau 30 sont moulés en une seule pièce. De la sorte, le second coulisseau 30 est en permanence centré sur l'extrémité sphérique 10 du premier élément de liaison 7 et la suit dans ses déplacements.

Pour permettre les débattements angulaires de la coque 6 malgré la présence des ergots 33, la cavité sphérique 12 du second élément de liaison 11 comporte des rainures 15 (l'une d'elles est visible à la figure 1) laissant passer les ergots 33 au travers de la paroi de la cavité sphérique 12, et autorisant un débattement angulaire du second élément de liaison 11 autour d'un axe contenu dans le plan équatorial précité, tout en bloquant une rotation du second élément de liaison 11 selon l'axe de pivotement Z.

Ainsi, lors d'un déplacement de la coque 6, le second coulisseau 30 se déplace d'une quantité égale à la composante du déplacement de la coque 6 selon ladite direction 31, et entraîne le premier coulisseau 20 à se dé-, placer d'une quantité égale à la composante du déplacement de la coque 6 selon la direction 21.

Et lors d'une rotation de la coque 6, la coque 6 tourne par rapport au second élément de liaison 11 d'une quantité égale à la composante de la rotation selon l'axe de pivotement Z de la coque 6 par rapport au second élément de liaison 11.

Ces dispositions permettent la mise en place aisée de capteurs pour la détermination des différents mouvements de la coque 6.

A cet égard, et comme cela est visible sur la figure 1, la coque 6 porte un inclinomètre 40 à deux axes adapté à mesurer les rotations de la coque 6 selon des axes contenus dans le plan équatorial.

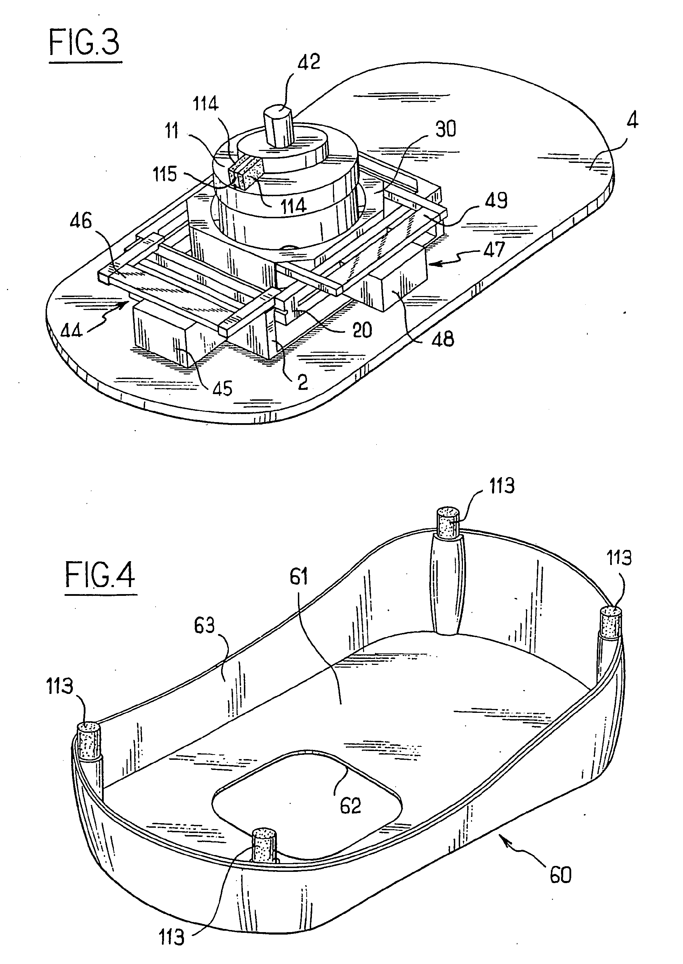

En outre, le périphérique d'entrée de l'invention comporte un potentiomètre 41 disposé entre le second élément de liaison 11 et la coque 6 pour mesurer une rotation selon l'axe de pivotement Z. Le potentiomètre 41 comporte une partie interne et une partie externe libres en rotation l'une par rapport à l'autre selon l'axe de pivotement Z. La partie interne est enfilée sur un téton 42 du second élément de liaison 11 qui présente un méplat (visible à la figure 3) pour arrêter la partie interne en rotation. La partie externe est arrêtée en rotation par rapport à la coque 6 par l'intermédiaire d'un toc 43 coopérant avec les flancs d'une ouverture 16 de la cavité cylindrique circulaire 14 de la coque 6.

Ces deux capteurs permettent de mesurer toutes les rotations de la coque autour du centre de l'extrémité sphérique 10 du premier élément de liaison 7.

Par ailleurs, et comme cela est visible à la figure 3, le périphérique d'entrée de l'invention comporte un premier capteur de déplacement rectiligne 44 comportant un lecteur optique 45 solidaire de la base 2 et une règle optique 46 solidaire du premier coulisseau 20, et un second capteur de déplacement rectiligne 47 comportant un lecteur optique 48 solidaire du premier coulisseau 20 et une règle optique 49 solidaire du second coulisseau 30. Ces deux capteurs de déplacement rectiligne permettent de mesurer les déplacements rectilignes de la coque 6 selon les directions 21 et 31.

Enfin, pour le sixième degré de liberté contrôlé par la molette de défilement 100, un capteur de rotation 101 (représenté ici en pointillé car caché par la molette 100) est disposé sur l'axe de la molette 100 pour en mesurer la rotation.

Selon un aspect particulier de l'invention, le périphérique d'entrée comporte des moyens de réinitialisation des capteurs, illustrés à la figure 1.

Les moyens de réinitialisation comprennent tout d'abord une première bille 50 disposée dans un logement creusé dans le premier élément de liaison 7 pour déboucher sur l'extrémité inférieure plane 8 de celui-ci, et poussée contre la surface plane 9 de la base 2 par un ressort 51. Dans la position illustrée à la figure 1, la première bille 50 est engagée dans un creux réalisé sur la surface plane 9 de la base 2 au centre de ladite surface, ce qui permet une indexation de la coque 6 vis à vis de la base 2. En plaçant par exemple un contacteur au fond du creux qui est manoeuvré par la première bille 50, on obtient un signal électrique pouvant servir à réinitialiser les signaux électriques issus des capteurs de déplacement rectiligne 44,47 lorsque la coque 6 se trouve ainsi indexée par rapport à la base 2.

Les moyens de réinitialisation comprennent également une deuxième bille 52 disposée dans un logement creusé dans le premier élément de liaison 7 pour déboucher au sommet de l'extrémité supérieure sphérique 10 de celui-ci, et poussé contre la cavité sphérique 12 du second élément de liaison 11 par un ressort 53. Dans la position illustrée à la figure 1, la deuxième bille 52 est engagée dans un creux réalisé dans la cavité sphérique 12 dans le prolongement de l'axe de pivotement Z, ce qui permet une indexation du second élément de liaison 11 vis à vis du premier élément de liaison 7, et, selon le même principe que précédemment, réinitialiser les signaux électriques issus de l'inclinomètre 40.

Selon l'invention, le périphérique d'entrée comporte un carénage 60 plus particulièrement visible à la figure 4, qui comporte un fond 61 avec un orifice 62, et une paroi latérale 63 légèrement bombée vers l'extérieur.

Comme cela est visible à la figure 1, le carénage 60 est disposé sous la coque 6 de façon que le fond 61 du carénage 60 soit en appui contre la semelle 4 et que la paroi latérale 63 coopère extérieurement avec une paroi latérale homologue 64 de la coque 6.

L'orifice 62 permet de laisser passer le pied 3 de la base 2 au travers du fond 61. L'orifice est suffisamment grand pour permettre les déplacements de la coque 6, tout en étant suffisamment petit pour que le fond 61 reste en permanence prisonnier dans l'espace 67 s'étendant entre la semelle 4 et la base 2. Ainsi, le carénage 60 est astreint à se déplacer parallèlement à la semelle 4, donc au plan d'appui P.

La coopération entre les parois latérales du carénage 60 et de la coque 6 oblige le carénage 60 à suivre la coque 6 dans ses déplacements linéaires et dans une rotation autour d'un axe parallèle à la direction transverse, la forme des parois 63,64 permettant néanmoins les débattements angulaires de la coque 6 par rapport au carénage 60.

Le carénage 60 empêche toute intrusion d'objets ou de pollution sous la coque 6. Par ailleurs, il évite au manipulateur malhabile de se pincer les doigts entre la coque 6 et la semelle 4.

En pratique, les parois latérales du carénage 60 et de la coque 6 s'étendent en regard l'une de l'autre avec un léger jeu. Des patins 65 moulés intégralement avec la coque 6 sur la face interne de sa paroi latérale 64 assurent un contact de surface réduite avec la paroi latérale 63 du carénage 60, afin de diminuer les frottement entre ces deux éléments.

Le périphérique d'entrée de l'invention est particulièrement adapté à être utilisé en conjonction avec un logiciel de conception assistée par ordinateur, ou encore un logiciel de visualisation d'objets virtuels.

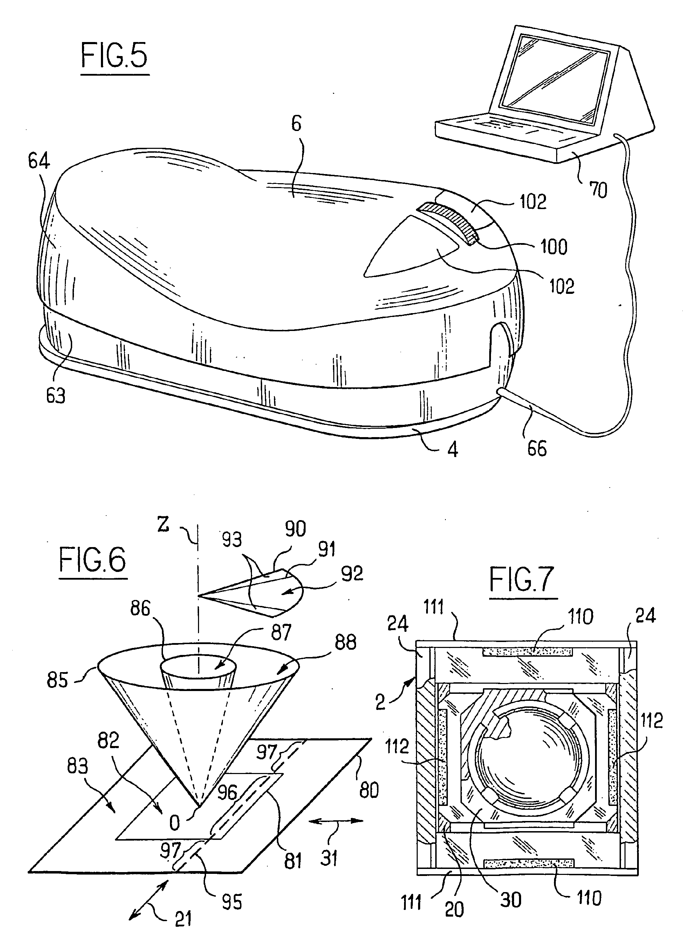

Comme cela est visible à la figure 5, un fil 66 transportant les signaux électriques issus des différents capteurs sort du carénage 60 pour être relié à un ordinateur 70, sur lequel est installé le logiciel.

Le périphérique d'entrée peut être utilisé de plusieurs façons. On peut tout d'abord associer chaque position de la coque 6 et de la molette 100, telle que mesurée par les capteurs, à une position dans l'espace virtuel dans lequel se trouve l'objet virtuel manipulé. On peut encore associer chaque position de la coque 6 et de la molette 100 à une vitesse de déplacement dans l'espace virtuel dans lequel se trouve l'objet virtuel manipulé.

Selon un aspect particulier, on peut panacher ces deux types d'associations selon le procédé suivant.

A la figure 6, on a illustré de façon schématique les cinq degrés de liberté de la coque 6.

Le rectangle 80 délimite l'ensemble des positions possibles dans le plan équatorial précité du centre de l'extrémité sphérique 10 du premier élément de liaison 7. Un rectangle interne 81 délimite dans le rectangle 80 une zone centrale 82 et une zone périphérique 83.

On choisit ici de faire les associations suivantes : pour toute position de la coque 6 dans la zone centrale 82, on associe une position de l'objet virtuel dans l'espace virtuel ; et pour toute position de la coque 6 dans la zone périphérique 83, on associe une vitesse de déplacement de l'objet virtuel dans l'espace virtuel.

De la même façon, le cône 85 délimite les débattements angulaires possibles de l'axe de pivotement Z autour dudit centre. Un cône interne 86 délimite dans le cône 85 une zone centrale 87 et une zone périphérique 88.

On choisit ici de faire les associations suivantes : pour toute position de l'axe de pivotement Z dans la zone centrale 86, on associe une position angulaire de l'objet virtuel dans l'espace virtuel ; et pour toute position de l'axe de pivotement Z dans la zone périphérique 88, on associe une vitesse de rotation de l'objet virtuel dans l'espace virtuel.

Enfin, le secteur angulaire 90 délimite les rotations possibles de la coque 6 autour de l'axe de pivotement Z. Un secteur angulaire interne 91 délimite dans le secteur angulaire 90 une zone centrale 92 et une zone périphérique 93.

On choisit ici de faire les associations suivantes : pour toute position angulaire de la coque 6 dans la zone centrale 92, on associe une position angulaire de l'objet virtuel dans l'espace virtuel ; et pour toute position angulaire de la coque 6 dans la zone périphérique 93, on associe une vitesse de rotation de l'objet virtuel dans l'espace virtuel.

On procède exactement de même pour la molette 100.

En vue de la matérialisation de ces différentes zones, le périphérique d'entrée est selon l'invention équipé de moyens de contrôle du mouvement de la coque 6.

Comme cela est visible à la figure 7, les moyens de contrôle comprennent des plots en mousse 110 disposés sur des supports 111 s'étendant entre les extrémités des montants 24 de la base 2 pour former des butées résilientes contre lesquelles le premier coulisseau 20 vient buter en fin de course.

La partie du mouvement du premier coulisseau 20 dans laquelle le premier coulisseau 20 n'est pas en contact avec l'un ou l'autre des plots en mousse 110 correspond à la zone centrale 82. Dans cette partie, la coque 6 ne subit aucun effort résistant (sauf de légers frottements). La partie du mouvement du premier coulisseau 20 dans laquelle le premier coulisseau 20 est en contact avec l'un ou l'autre des plots en mousse 110 correspond à la zone périphérique 83. Dans cette partie, la coque 6 subit un effort de rappel du fait de l'appui du premier coulisseau sur l'un ou l'autre de plots en mousse 110. La présence d'un rappel permet à l'opérateur de distinguer entre la zone centrale et la zone périphérique.

A titre d'exemple, on détaille ici un déplacement rectiligne de la coque 6 selon la direction 21, c'est-à-dire la direction de déplacement du premier coulisseau 20. Ce déplacement est représenté à la figure 6 par la ligne en traits pointillés 95. Cette ligne comporte une plage centrale 96, dite isotonique, qui s'étend dans la zone centrale 82 et qui correspond à un mouvement libre de la coque 6. La ligne 95 comporte deux plages d'extrémité 97 dites élastiques, s'étendant dans la zone périphérique 83 et qui correspond à un mouvement de la coque 6 soumis à rappel vers la plage centrale.

De la même façon, les moyens de contrôle comportent des plots en mousse 112 disposés sur le premier coulisseau 20 pour former des butées résilientes contre lesquelles le second coulisseau 30 vient buter en fin de course. Les plots en mousse 112 matérialisent la zone centrale 82 et la zone périphérique 83 pour un déplacement rectiligne selon la direction 31.

Les moyens de contrôle comprennent en outre des plots en mousse 113 (visibles à la figure 4) disposés sur le carénage 60 pour former des butées résilientes contre lesquelles la coque 6 vient buter en fin de course lors de débattements angulaires de celle-ci autour d'axes contenus dans le plan équatorial. Les plots en mousse 113 matérialisent la zone centrale 87 et la zone périphérique 88 pour des débattements angulaires de la coque 6 autour d'axes contenus dans le plan équatorial.

Enfin, les moyens de contrôle comprennent des plots en mousse 114 (visibles à la figure 3 et à la figure 1) disposés de part et d'autre d'une cloison 115 du second élément de liaison 11 qui forment des butées résilientes contre lesquelles les flancs de l'ouverture 16 de la cavité cylindrique circulaire 14 de la coque 6 viennent butée en fin de course. Les plots en mousse 114 matérialisent la zone centrale 92 et la zone périphérique 93 pour une rotation de la coque 6 autour de l'axe de pivotement Z.

On peut ainsi définir pour tous les degrés de liberté de la coque 6 une plage centrale dans laquelle le mouvement de la coque est libre et des plages d'extrémité dans laquelle la coque est soumise à rappel vers la plage centrale.

De même, la molette 100 porte des plots en mousse 116 (visibles à la figure 1) de même fonction.

Ainsi, tant que la coque se trouve dans les zones centrales, le logiciel met en correspondance avec la position de la coque la position de l'objet virtuel dans l'espace virtuel. L'opérateur a alors l'impression de bouger directement l'objet virtuel visualisé à l'écran en bougeant la coque 6, de façon très instinctive. Si l'opérateur pousse la coque 6 de sorte que celle-ci entre dans l'une des zones périphériques, alors le logiciel associe à la position de la coque 6 un déplacement à vitesse donnée, par exemple pour se déplacer rapidement vers une autre portion de l'objet virtuel en vue de visualiser la dite portion.

L'invention n'est pas limitée à ce qui vient d'être décrit, mais bien au contraire englobe toute variante entrant dans le cadre défini par les revendications.

En particulier, bien que l'on ait illustré une cinématique particulière permettant tout déplacement de la coque par rapport à la base à l'exception d'un déplacement selon une direction transverse perpendiculaire au plan d'appui, l'invention couvre tout cinématique permettant ce type de liaison, comme par exemple un unique élément de liaison ayant une extrémité inférieure plane glissant sur une surface plane de la base, et une extrémité supérieure sphérique reçue dans une cavité sphérique homologue de la coque.

Bien que l'on ait illustré le carénage avec une paroi latérale qui s'étend à l'intérieur de la paroi latérale de la coque, la paroi latérale du carénage pourra s'étendre à l'extérieur de la paroi latérale de la coque.

Bien que l'on ait indiqué que l'on associe des vitesses ou des positions à la position de la coque et de la molette, on pourra associer d'autres paramètres de manipulation de l'objet, telles que des zooms, ou encore des modifications de couleurs.

Bien que l'on ait indiqué que chaque degré de liberté comporte une plage centrale isotonique et des plages d'extrémité élastiques, on pourra prévoir pour chaque degré de liberté toutes les configurations possibles pouvant aller jusqu'à un degré de liberté totalement isotonique, ou un degré de liberté totalement élastique.

Bien que dans l'exemple illustré, les positions de la coque et de la molette dans la plage centrale sont associées à des positions de l'objet virtuel et les positions de la coque et de la molette dans les plages d'extrémité sont associées à des vitesses de déplacement de l'objet virtuel, on pourra prévoir d'autres associations, comme une vitesse lente pour la plage centrale et une vitesse rapide pour les plages d'extrémité.

En outre, bien que les moyens de contrôle des mouvements de la coque soient ici des plots en mousse coopérant avec les parties mobiles du périphérique, d'autres moyens de contrôle pourront être utilisés, comme des moteurs asservis pour laisser libre le mouvement dans une plage centrale et opposer à l'encontre du mouvement un effort de rappel dans des plages d'extrémité. Alternativement, le périphérique pourra ne comporter aucun moyen de contrôle, ou encore des moyens de contrôle n'agissant que sur certains des degrés de liberté de la coque. Il est à noter que les plages centrales et périphériques gérées par le logiciel associé au périphérique peuvent ne pas coïncider avec les plages centrales et périphériques matérialisées par les moyens de contrôle.

Bien que l'on ait illustré la coque avec un organe de commande d'un degré de liberté supplémentaire sous la forme d'une molette, le périphérique pourra comporter d'autres types d'organes de commande, comme un pointeur disposé sur la coque ou sur un autre endroit du périphérique.

En outre, le périphérique peut comporter d'autres types d'organes, comme des boutons de sélection 102 (visibles à la figure 5) disposés ici sur la coque, similaires à ceux que l'on trouve sur une souris.

Enfin, bien que le périphérique d'entrée ait été ici décrit en association avec un logiciel de conception ou de visualisation par ordinateur, le périphérique d'entrée pourra être utilisé comme un organe de manipulation d'un objet réel, par exemple par l'intermédiaire d'un bras manipulateur.

## Revendications

1. Périphérique d'entrée pour ordinateur ou similaire, comportant une partie mobile (6,60) manipulée par l'opérateur et équipé de capteurs électriques (40,41, 44,47) aptes à générer des signaux électriques à destination de l'ordinateur en réponse à des mouvements de la partie mobile imposés par l'opérateur, la partie mobile comprenant une coque (6) reliée à une base (2) fixe au moyen d'une liaison cinématique agencée pour autoriser tout mouvement de la coque (6) par rapport à la base à l'exception d'un déplacement selon une direction sensiblement perpendiculaire à un plan d'appui de la base, **caractérisé en ce que** la partie mobile comprend en outre un carénage (60) qui est entraîné par la coque (6) et qui comporte une paroi latérale (63) qui s'étend de façon à empêcher toute intrusion sous la coque (6) quelle que soit la position de celle-ci.

2. Périphérique d'entrée selon la revendication 1, comportant en outre des moyens (62, 67) pour limiter les déplacements du carénage (60) à des déplacements parallèles au plan d'appui, la coque (6) ayant une paroi latérale (64) qui s'étend en regard de la paroi latérale (63) du carénage (60), les parois latérales (63,64) coopérant entre elles pour assurer l'entraînement du carénage (60) par la coque (6) tout en permettant des débattements angulaires de la coque (6) autour d'axes parallèles au plan d'appui.

3. Périphérique d'entrée selon la revendication 2, **caractérisé en ce que** les moyens de limitation du déplacement du carénage comportent un espace (67) s'étendant entre la base (2) et une semelle (4) de la base (2) dans lequel est inséré un fond (61) du carénage (60).

4. Périphérique d'entrée selon la revendication 1, dans lequel la liaison cinématique comporte :
- un premier élément de liaison (7) lié à la base par une liaison laissant libre deux déplacements selon des directions parallèles au plan d'appui;
- un second élément de liaison (11) lié d'une part au premier élément de liaison (7) par une liaison rotulaire, et lié d'autre part à la coque (6) par une liaison pivot ayant un axe de pivotement (Z) concourrant avec un centre de la liaison rotulaire;
le périphérique d'entrée comportant des moyens d'arrêt (15,33) pour empêcher une rotation du second élément de liaison (11) autour de l'axe de pivotement (Z).

5. Périphérique selon la revendication 4, **caractérisé en ce qu'**il comporte un premier coulisseau (20) monté à coulissement sur la base (2) dans un plan parallèle au plan d'appui selon une première direction (21), un second coulisseau (30) monté à coulissement sur le premier coulisseau (20) dans ledit plan selon une seconde direction (31) perpendiculaire à la première direction, le second coulisseau comportant des moyens (33) de son centrage sur le premier élément de liaison (11).

6. Périphérique selon la revendication 5, **caractérisé en ce que** les moyens de centrage comportent au moins un ergot (33) qui s'étend entre le second coulisseau (30) et le premier élément de liaison (7) pour solidariser celui-ci au second coulisseau (30), le second élément de liaison comportant une rainure (15) engagée sur l'ergot (33) et formant avec celui-ci les moyens d'arrêt en rotation du second élément de liaison (11) autour de l'axe de pivotement (Z).

7. Périphérique d'entrée selon la revendication 1, comportant en outre des moyens de réinitialisation (50,52) d'au moins l'un des capteurs lorsque la coque (6) est dans une position prédéterminée.

8. Périphérique d'entrée selon la revendication 1, comportant en outre des moyens de contrôle (110, 112, 113, 114) du déplacement de la coque (6) par rapport à la base (2) selon l'un au moins des degrés de liberté de déplacement de la coque (6), de sorte que ledit degré de liberté présente une plage centrale (96) dans laquelle les moyens de contrôle sont adaptés à laisser la coque (6) prendre toute position en étant libre de se déplacer, et des plages d'extrémité (97) dans laquelle les moyens de contrôle sont adaptés à laisser la coque (6) prendre toute position à l'encontre d'un effort de rappel vers la plage centrale.

9. Périphérique d'entrée selon la revendication 8, dans lequel les moyens de contrôle du déplacement de la coque (6) comportent au moins un plot résilient (110,112,113,114) adapté à former une butée pour un élément (20,30,6) du périphérique d'entrée mobile avec la coque (6).

10. Périphérique selon la revendication 1, comportant un organe de contrôle (100) d'un degré de liberté supplémentaire.

11. Dispositif de manipulation d'objet, comportant un périphérique d'entrée selon la revendication 8 et des moyens pour manipuler l'objet en fonction de positions de la coque du périphérique d'entrée qui comportent :
- des moyens pour associer à une position de la coque (6) un premier paramètre de manipulation de l'objet lorsque ladite position se trouve dans la plage centrale ;
- des moyens pour associer à une position de la coque (6) un second paramètre de manipulation de l'objet lorsque la dite position se trouve dans les plages d'extrémité.

## Claims

1. An input peripheral for a computer or the like, the peripheral comprising a moving portion (6, 60) handled by the operator and fitted with electrical sensors (40, 41, 44, 47) suitable for generating electrical signals for the computer in response to movements imposed on the moving portion by the operator, said moving portion comprises a shell (6) connected to a stationary base (2) by means of a linkage arranged to allow any movement of the shell (6) relative to the base with the exception of movement in a direction substantially perpendicular to a bearing plane of the base, the peripheral being **characterized in that** the moving portion further comprising a hull (60) that is entrained by the shell (6) and that includes a side wall (63) extending so as to prevent any intrusion under the shell (6) regardless of its position.

2. An input peripheral according to claim 1, further including means (62, 67) for limiting the movements of the hull (60) to movements parallel to the bearing plane, the shell (6) having a side wall (64) that extends facing a side wall (63) of the hull (60), the side walls (63, 64) co-operating with each other so as to ensure that the hull (60) is entrained by the shell (6) while enabling the shell (6) to tilt angularly about axes parallel to the bearing plane.

3. An input peripheral according to claim 2,
**characterized in that** the means for limiting movements of the hull comprise a space (67) extending between the base (2) and a soleplate (4) of the base (2) in which a bottom (61) of the hull (60) is inserted.

4. An input peripheral according to claim 1, in which the linkage comprises:
a first connection element (7) connected to the base via a connection leaving two movements free along directions parallel to the bearing plane; and
a second connection element (11) connected firstly to the first connection element (7) via a ball-and-socket connection, and connected secondly to the shell (6) via a pivot connection having a pivot axis (Z) that coincides with the center of the ball-and-socket connection;
the input peripheral including stop means (15, 33) for preventing the second connection element from moving in rotation about the pivot axis (Z).

5. An input peripheral according to claim 4, **characterized in that** it includes a first slider (20) mounted to slide on the base (2) in a plane parallel to the bearing plane in a first direction (21), and a second slider (30) mounted to slide on the first slider (20) in said plane in a second direction (31) perpendicular to the first direction, the second slider including centering means (33) for centering it on the first connection element (11).

6. An input peripheral according to claim 5, **characterized in that** the centering means comprise at least one stud (33) extending between the second slider (30) and the first connection element (7) to secure it to the second slider (30), the second connection element including a groove (15) engaged on the stud (33) and co-operating therewith to form the stop means for preventing movement in rotation of the second connection element (11) about the pivot axis (Z).

7. An input peripheral according to claim 1, further including reinitialization means (50, 52) for reinitializing at least one of the sensors when the shell (6) is in a predetermined position.

8. An input peripheral according to claim 1, further including control means (110, 112, 113, 114) for controlling the movement of the shell (6) relative to the base (2) in at least one of the degrees of freedom in movement of the shell (6), such that said degree of freedom presents a central range (96) in which the control means are adapted to leave the shell (6) free to move in any position, and end ranges (97) in which the control means are adapted to leave the shell (6) free to move to any position against a return force towards the central range.

9. An input peripheral according to claim 8, in which the movement control means of the shell (6) comprise at least one resilient pad (110, 112, 113, 114) adapted to form an abutment for an element (20, 30, 6) of the input peripheral that moves with the shell (6).

10. An input peripheral according to claim 1, including a control member (100) for controlling an additional degree of freedom.

11. An object manipulation device comprising an input peripheral according to claim 8 and means for manipulating the object as a function of the position of the shell of the input peripheral, which means are adapted:
· to associate a position of the shell (6) with a first object-manipulation parameter when said position lies in the central range; and
· to associate a position of the shell (6) with a second object-manipulation parameter when said position lies in either end ranges.

## Patentansprüche

1. Eingabegerät für einen Rechner oder dergleichen, das einen beweglichen Teil (6, 60) umfasst, der von der Bedienungsperson bedient wird und mit elektrischen Sensoren (40, 41, 44, 47) ausgestattet ist, die dazu geeignet sind, in Antwort auf Bewegungen des beweglichen Teils, die von der Bedienungsperson verursacht werden, elektrische Signale zum Rechner hin zu erzeugen, wobei der bewegliche Teil ein Gehäuse (6) umfasst, das mit einer feststehenden Basis (2) mittels einer kinematischen Verbindung verbunden ist, die derart ausgebildet ist, dass sie jegliche Bewegung des Gehäuses (6) gegenüber der Basis mit Ausnahme einer Auslenkung in eine zu einer Auflageebene der Basis im Wesentlichen senkrechte Richtung zulässt, **dadurch gekennzeichnet, dass** der bewegliche Teil ferner eine Abdeckung (60) umfasst, die von dem Gehäuse (6) mitgenommen wird und eine Seitenwand (63) hat, die sich derart erstreckt, dass sie jeglichen Eintrag unter das Gehäuse (6) unabhängig von dessen Position verhindert.

2. Eingabegerät nach Anspruch 1, ferner umfassend Mittel (62, 67) zum Beschränken der Bewegungen der Abdeckung (60) auf Bewegungen, die parallel zur Auflageebene sind, wobei das Gehäuse (6) eine Seitenwand (64) hat, die sich gegenüber der Seitenwand (63) der Abdeckung (60) erstreckt, wobei die Seitenwände (63, 64) miteinander zusammenwirken, um die Mitnahme der Abdeckung (60) durch das Gehäuse (6) sicherzustellen und dabei Winkelverschiebungen des Gehäuses (6) um zur Auflageebene parallele Achsen zu gestatten.

3. Eingabegerät nach Anspruch 2, **dadurch gekennzeichnet, dass** die Mittel zum Beschränken der Bewegung der Abdeckung einen sich zwischen der Basis (2) und einer Bodenplatte (4) der Basis (2) erstreckenden Raum (67) umfassen, in den ein Boden (61) der Abdeckung (60) eingefügt ist.

4. Eingabegerät nach Anspruch 1, wobei die kinematische Verbindung umfasst:
- ein erstes Verbindungselement (7), das mit der Basis über eine Verbindung verbunden ist, die zwei Auslenkungen in zur Auflageebene parallele Richtungen zulässt,
- ein zweites Verbindungselement (11), das einerseits mit dem ersten Verbindungselement (7) über eine Kugelgelenkverbindung und andererseits mit dem Gehäuse (6) über eine Schwenkverbindung verbunden ist, die eine Schwenkachse (Z) hat, welche sich durch den Mittelpunkt der Kugelgelenkverbindung erstreckt,
wobei das Eingabegerät Anschlagmittel (15, 33) umfasst, die dazu bestimmt sind, eine Drehung des zweiten Verbindungselements (11) um die Schwenkachse (Z) zu verhindern.

5. Eingabegerät nach Anspruch 4, **dadurch gekennzeichnet, dass** es einen ersten Schieber (20) umfasst, der an der Basis (2) in einer zur Auflageebene parallelen Ebene in eine erste Richtung (21) verschiebbar gelagert ist, sowie einen zweiten Schieber (30), der an dem ersten Schieber (20) in der genannten Ebene in eine zweite Richtung (31) verschiebbar gelagert ist, die senkrecht zur ersten Richtung ist, wobei der zweite Schieber Mittel (33) für seine Zentrierung an dem ersten Verbindungselement (11) umfasst.

6. Eingabegerät nach Anspruch 5, **dadurch gekennzeichnet, dass** die Zentrierungsmittel mindestens eine Nase (33) umfassen, die sich zwischen dem zweiten Schieber (30) und dem ersten Verbindungselement (7) erstrecken, um dieses am zweiten Schieber (30) zu befestigen, wobei das zweite Verbindungselement eine Nut (15) umfasst, die mit der Nase (33) in Eingriff steht und mit dieser die Anschlagmittel zum Stoppen einer Drehung des zweiten Verbindungselements (11) um die Schwenkachse (Z) bildet.

7. Eingabegerät nach Anspruch 1, ferner umfassend Reinitialisierungsmittel (50, 52) zum Reinitialisieren mindestens eines der Sensoren, wenn das Gehäuse (6) in einer vorgegebenen Position ist.

8. Eingabegerät nach Anspruch 1, ferner umfassend Kontrollmittel (110, 112, 113, 114) zum Kontrollieren der Bewegung des Gehäuses (6) gegenüber der Basis (2) gemäß mindestens einem der Bewegungsfreiheitsgrade des Gehäuses (6), derart, dass der genannte Freiheitsgrad einen zentralen Bereich (96) aufweist, in dem die Kontrollmittel dazu geeignet sind, das Gehäuse (6) jede Position einnehmen zu lassen, indem es sich frei bewegen kann, sowie Endbereiche (97), in denen die Kontrollmittel dazu geeignet sind, das Gehäuse (6) jede Position entgegen einer zu dem zentralen Bereich gerichteten Rückstellkraft einnehmen zu lassen.

9. Eingabegerät nach Anspruch 8, wobei die Kontrollmittel zum Kontrollieren der Bewegung des Gehäuses (6) mindestens einen federnden Stift (110, 112, 113, 114) umfassen, der dazu geeignet ist, einen Anschlag für ein Element (20, 30, 6) des Eingabegeräts zu bilden, das mit dem Gehäuse (6) beweglich ist.

10. Eingabegerät nach Anspruch 1, umfassend ein Kontrollelement (100) zum Kontrollieren eines zusätzlichen Freiheitsgrades.

11. Vorrichtung zur Bedienung eines Objekts, umfassend ein Eingabegerät nach Anspruch 8 und Mittel zum Bedienen des Objekts in Abhängigkeit von Positionen des Gehäuses des Eingabegeräts, wobei die Mittel umfassen:
- Mittel zum Zuordnen eines ersten Bedienparameters des Objekts zu einer Position des Gehäuses (6), wenn sich die genannte Position in dem zentralen Bereich befindet,
- Mittel zum Zuordnen eines zweiten Bedienparameters des Objekts zu einer Position des Gehäuses (6), wenn sich die genannte Position in den Endbereichen befindet.
